# EUROPÄISCHE PATENTSCHRIFT

(11) **EP 3 423 861 B1**
(45) Veröffentlichungstag und Bekanntmachung des Hinweises auf die Patenterteilung: **13.10.2021**
(21) Anmeldenummer: 17710112.8
(22) Anmeldetag: 06.02.2017
(51) Int. Cl.: G01S 7/521, G01V 1/18, H04R 1/44, G01H 3/00, H04R 1/02

(54) **SYSTEM FÜR EINE SONAREINRICHTUNG SOWIE UNTERWASSERFAHRZEUG UND VERFAHREN DAMIT**
SYSTEM FOR A SONAR DEVICE AND UNDERWATER VEHICLE AND METHOD USING SAME
SYSTÈME POUR UN DISPOSITIF SONAR, VÉHICULE SUBMERSIBLE ET PROCÉDÉ CORRESPONDANT

(30) Priorität: 03.03.2016 DE 102016103787
(43) Veröffentlichungstag der Anmeldung: 09.01.2019
(73) Patentinhaber: ATLAS ELEKTRONIK GmbH, 28309 Bremen (DE)
(72) Erfinder: HOFFMANN, Christoph, 27777 Ganderkesee (DE)
(74) Vertreter: thyssenkrupp Intellectual Property GmbH
(86) Internationale Anmeldenummer: PCT/DE2017/100082
(87) Internationale Veröffentlichungsnummer: WO 2017/148464

(56) Entgegenhaltungen:
- DE-A1-102008 052 354
- GB-A- 2 180 120
- GB-A- 2 186 152

## Beschreibung

Die Erfindung betrifft den Bereich der Unterwasserschatiempfanger, insbesondere den Bereich der Sonareinrichtungen zum Empfangen von Unterwasserschall.

Aus dem Stand der Technik sind Unterwasserfahrzeuge mit Sonareinrichtungen bekannt. Mit der Sonareinrichtung werden Schallwellen, die sich unter Wasser in bestimmter Weise, nämlich insbesondere in einem tiefen Frequenzbereich, ausbreiten, empfangen, Die Sonareinrichtung weist hierzu üblicherweise eine Vielzahl von Unterwasserschallempfängem, nämlich sogenannten Hydrophone, auf, die mit einer elektronischen Signalverarbeitungseinriehiung elektrisch verbunden sind.

Die Hydrophone umfassen gemäß dem Stand der Technik einen Hohlkörper, der aus keramischem Material, das piezoelektrisch ist, geformt ist. Das piezoelektrische Material ist von der Innenseite sowie der Außenseite mit einer leitenden Beschichtung versehen, sodass Schallwellen, dessen Druckveränderung, die auf das piezoelektrische Material wirkt, an den elektrisch leitenden Beschichtungen gemessen werden können.

Eine Sonareinrichtung besteht dabei gemäß dem Stand der Technik aus einer Vielzahl von in horizontaler Umlaufrichtung des Unterwasserfahrzeugs angeordneten Elementen, die jeweils mehrere übereinander angeordnete Hydrophone aufweisen. Die in Umlaufrichtung angeordneten Hydrophone dienen, um Schall aus verschiedenen horizontalen Richtungen, insbesondere durch sogenanntes "Beamforming" detektieren zu können.

Senkrecht übereinander angeordnete Hydrophone innerhalb eines Elements, das auch Stave genannt wird, dienen zur Verstärkung der einzelnen Hydrophonsignale oder für sogenanntes vertikales Bearnforning, um die Einfallrichtung des Schalls auch in vertikaler Richtung auflösen zu können.

Gemäß dem Stand der Technik werden diese Elemente, also Staves, hergestellt, indem mehrere Hydrophone auf einem Träger zusammen in einer Gussform angeordnet werden und dann der Träger zusammen mit den Hydrophonen mit einem Vergussmaterial, z. B. Harz, vergossen wird.

Die elektrischen Anschlüsse der Hydrophone sind dabei vor dem Vergießen aus dem Vergussmaterial herausgeführt und werden dann mit der elektronischen Signalverarbeitungseinrichtung, die im Unterwasserfahrzeug oder am Unterfahrzeugzeug angeordnet ist, verbunden. Nachteilig ist, dass im Falle eines einzelnen defekten Hydrophons innerhalb eines einzelnen Staves das ganze Element ausgetauscht werden muss, Ein Lösen des Vergussmaterials vom Träger und den einzelnen Hydrophonen ist nämlich aufgrund des schwer zu entfernenden Vergussmaterials nicht wirtschaftlich möglich.

Weiterhin nachteilig am Verguss ist, dass dieser nur mittels einer Form herstellbar ist, also der Träger mit seinen darauf angeordneten Hydrophonen in einer Form platziert wird und diese Form dann mit Gussmaterial vergossen wird. Da die Staves jedoch an einem Unterwasserfahrzeug im Bereich von Rundungen und Kanten in einer horizontalen Linie nebeneinander angeordnet werden, wäre es vorteilhaft, wenn die äußere Form eines Staves an seine entsprechende Position anpassbar wäre. Dies ist jedoch nicht realisierbar, da hierfür für jeden einzelnen Stave eine einzelne Vergussform nötig wäre. Eine präzise Positionierung der einzelnen Hydrophone je nach Einbauort ist daher nicht möglich und eine aufwändige elektronische Kalibrierung ist daher notwendig.

In GB 2186152 A wird eine Sonareinrichtung (array of sonic devices) mit einem Grundkörper (stave 30) beschrieben, der eine Vielzahl von Hydrophonen (sonar transducer elements 16) in jeweils einem Gehäuse (casing 10) aus thermoplastischem Material hält. Die Hydrophone 16 im Gehäuse 10 sind von einem schäumenden Kunststoff (foamed plastics material) umgeben. Das Gehäuse 10 wird an dem Grundkörper 30 mit Hilfe von Klammern (clamps 34) gehalten, welche in eine ringförmige Aussparung im Gehäuse 10 eingreifen.

DE 102008052354 A1 zeigt eine Unterwasserantenne mit mehreren Antennensegmenten 11. Jedes Antennensegment 11 umfasst einen Reflektor 12 und eine Vielzahl von Wandlern (Hydrophonen 13), die in einer Vergussmasse 17 eingebettet sind und zu einem Wandlerstab 13 zusammengefasst sind, wobei der Wandlerstab 13 zwei federnde Halteelemente 18, 19 umfasst. Eine obere Haltevorrichtung 25 und eine untere Haltevorrichtung 26 halten einen Wandlerstab 13 an den beiden Halteelementen 18, 19.

Aufgabe der vorliegenden Erfindung ist es also, die Nachteile des Standes der Technik zu überwinden. Insbesondere soll eine Möglichkeit gefunden werden, einzelne Hydrophone eines Sonars möglichst einfach und kostengünstig wechseln zu können und/oder die Hydrophone möglichst präzise in gewünschten Positionen auf einem Träger anzuordnen. Jedenfalls soll eine Weiterbildung des Standes der Technik erfolgen.

Hierzu umfasst die Erfindung ein System für eine Sonareinrichtung. Das System umfasst einen Grundkörper mit mindestens einer Halterung für ein Hydrophonelement. Die Halterung und das Hydrophonelement sind derart eingerichtet, miteinander lösbar verbunden zu werden. Das Hydrophonelement weist hierbei ein Hydrophon auf, das seewasserbeständig mit einem Kunststoffkörper umhüllt ist.

Im Gegensatz zum Stand der Technik wird also das Hydrophon selbst mit einem Kunststoffkörper umhüllt, um das Hydrophon vor Seewasser zu schützen. Dadurch muss nicht mehr der Grundkörper mit dem Hydrophon insgesamt vergossen werden und es ist das Auswechseln eines einzelnen Hydrophons im Fehlerfall eines Hydrophons möglich. Dadurch, dass das System insgesamt nicht mehr vergossen werden muss, da der Kunststoffkörper das Hydrophon vor Seewasser und Stößen schützt, kann das System viel kompakter als ein üblicher Stave aufgebaut werden. Dadurch ist auch eine flexiblere Anordnung der Systeme möglich, die beispielsweise besser an eine Kontur eines Unterwasserfahrzeugs anpassbar ist.

Lösungsgemäß umfasst der Grundkörper des Systems zwei Abschnitte oder ist zweiteilig ausgebildet. Die zwei Teile oder zwei Abschnitte weisen jeweils eine rechteckige Kontur auf und sind übereinander angeordnet. An gegenüberliegenden Enden der zwei Abschnitte oder zwei Teile des Grundkörpers stehen diese zwei Abschnitte oder zwei Teile in Kontakt bzw. sind miteinander verbunden. Zwischen den in Kontakt stehenden oder verbundenen Enden ist ein Zwischenraum ausgebildet. Dieser Zwischenraum dient, um mit einem Material gefüllt zu werden, das eine im Vergleich zum Grundkörper noch härtere Schallreflektion aufweist und somit eine noch bessere Reflektion der auf das oder die Hydrophone einfallenden Schallwellen erzeugt, um die Signalstärke weiter zu erhöhen.

Lösungsgemäß ist der Zwischenraum des Grundkörpers mit einem Metall gefüllt.

Gemäß einer ersten Ausführungsform umfasst der Grundkörper mindestens zwei oder mehr Halterungen, wobei die Halterungen in einem bzw. jeweils in vordefinierten Abständen zueinander angeordnet sind. Diese Abstände sind ferner auf die spätere Position des Systems, z. B. an einem Unterwasserfahrzeug, abgestimmt. Die Halterungen werden vorzugsweise einfach durch Verkleben auf dem Grundkörper befestigt, sodass die Positionen mehrerer Hydrophone beliebig ohne großen Aufwand auf dem Grundkörper angeordnet werden können, um an die Empfangseigenschaften der Sonareinrichtung angepasst zu werden. Auch verschiedene Abstände der Hydrophone bzw. der Halterungen für die Hydrophone von benachbarten Systemen sind daher auf einfache Weise möglich.

Gemäß einer weiteren Ausführungsform weist das System einen Grundkörper auf, der mit einem weiteren Metall gefertigt ist. Vorzugsweise wird für den Grundkörper Aluminium verwendet. Durch den Grundkörper aus Metall werden auf das Hydrophon einfallende Schallwellen am Grundkörper reflektiert und zurück auf das am Grundkörper angebrachte Hydrophon gesendet. Hierdurch - da der Abstand zwischen dem Grundkörper und dem entsprechenden Hydrophon sehr gering ist - entsteht nur ein vernachlässigbarer Laufzeitunterschied und die Empfangsstärke wird signifikant erhöht. Aluminium ist besonders gut geeignet, da es seewasserbeständig und zudem ein leichtes und für den Anwendungsfall ausreichend stabiles Material ist.

Gemäß einer weiteren Ausführungsform ist der Zwischenraum des Grundkörpers mit einem Metall, das Unterwasserschall besser reflektiert als Aluminium, insbesondere mit Blei, gefüllt. Blei lässt sich auf einfache Weise in den Zwischenraum einfüllen, ist korrosionsbeständig und hat vorteilhafte Eigenschaften im Hinblick auf Schallreflexionen. Eine Kombination aus dem Grundkörper aus Aluminium mit Blei im Zwischenraum ergibt eine hohe Schallreflexion bei gleichzeitig geringem Gewicht des Systems.

Gemäß einer weiteren Ausführungsform ist in der Grenzschicht zwischen dem Grundkörper und dem in den Zwischenraum eingefüllten Metall eine Kunststoffschicht, insbesondere eine Gummischicht, angeordnet. Die Gummischicht dient vorteilhafterweise, um das in den Zwischenraum gefüllte Metall sicher im Zwischenraum zu halten, auch wenn Vibrationen oder Erschütterungen auf das System einwirken.

Gemäß einer weiteren Ausführungsform weist der Grundkörper die bereits oben genannte rechteckige Kontur auf, die eine durch die Kontur gebildete Oberseite und eine durch die Kontur gebildete Unterseite aufweist. Auf der Oberseite ist die mindestens eine Halterung angeordnet und auf der Unterseite ist ein flexibles Material, insbesondere ein Weichschaum, angeordnet. Der Weichschaum dient zur Vibrationsentkopplung des an ein Unterwasserfahrzeug angebrachten Systems.

Gemäß einer weiteren Ausführungsform sind an beiden Enden des Grundkörpers, an denen die zwei Teile oder die zwei Abschnitte des Grundkörpers miteinander verbunden sind, jeweils Federelemente angeordnet. Diese Federelemente sind beispielsweise Metallfederelemente, die an ihren beiden Federenden jeweils einerseits mit dem Grundkörper und andererseits mit einem Unterwasserfahrzeug verbindbar sind. Hierzu weisen die Federelemente vorzugsweise einen flexiblen Kunststoff, beispielsweise ein Gummimaterial, auf, wodurch eine weitere Vibrationsentkopplung erfolgt. Außerdem wird so eine sichere und feste Verbindung des Grundkörpers mit dem Unterwasserfahrzeug gewährleistet.

Gemäß einer weiteren Ausführungsform weist das System mindestens drei Halterungen und drei Hydrophonelemente, z. B. fünf Halterungen und fünf Hydrophonelemente, auf. Besonders bevorzugt sind acht Halterungen und acht Hydrophonelemente des Systems vorgesehen.

Durch eine Anzahl von mehr als drei Halterungen und drei Hydrophonelementen ist es möglich, mit senkrecht ausgerichteten Systemen ein vertikales Beamforming, also richtungsselektiertes Empfangen von Schallwellen in vertikaler Richtung, zu ermöglichen.

Gemäß einer weiteren Ausführungsform weist jedes Hydrophonelement des Systems eine elektrische Leitung auf, wobei diese elektrische Leitung jedes der Hydrophonelemente zumindest teilweise auf der vom Grundkörper abgewandten Seite des flexiblen Materials in Kabelhalterungen in Richtung auf eine Sensorelektronikschaltung hin geführt wird.

Eine sichere Führung der Kabel der Hydrophonelemente ist somit möglich.

Gemäß einer weiteren Ausführungsform sind seitlich im Grundkörper sowie im flexiblen Material Kanäle eingebracht, um die Leitungen jedes der Hydrophonelemente von der Oberseite des Grundkörpers zur vom Grundkörper abgewandten Seite des flexiblen Materials zu führen, wobei die Leitungen dann in den Kabelhalterungen weiter in Richtung auf die Sensorelektronikschaltung hin geführt werden.

Gemäß einer weiteren Ausführungsform weist das System mehrere Hydrophonelemente auf und ist derart eingerichtet, dass jedes der Hydrophonelemente des Systems im Betrieb des Systems separat auswechselbar ist. Der Austausch eines defekten Hydrophonelements ist somit auf einfache Weise möglich, ohne das System komplett von einem Unterwasserfahrzeug zu lösen.

Ferner betrifft die Erfindung eine Sonareinrichtung mit mehreren Systemen nach einem der Ansprüche 1 bis 10 sowie mehreren Sensoreiektronikschaltungen, wobei die Hydrophonelemente von mindestens zwei, z. B. vier, insbesondere acht, Systemen jeweils mit einer Sensorelektronik elektrisch verbunden sind.

Ferner betrifft die Erfindung ein Unterwasserfahrzeug mit einer Sonareinrichtung nach Anspruch 11.

Außerdem betrifft die Erfindung ein Verfahren zum Auswechseln eines einzelnen Hydrophonelements eines Systems nach einer der vorgenannten Ausführungsformen, Gemäß dem Verfahren wird ein Hydrophonelement, das ein Hydrophon aufweist, welches seewasserbestândig mit einem Kunststoffkörper umhüllt ist, zum Austauschen aus einer Halterung des Systems entfernt. Ferner wird in die Halterung, aus der das Hydrophonelement entfernt wurde und das an einem Grundkörper des Systems angeordnet ist, ein anderes Hydrophonelement eingesetzt.

Der Austausch eines einzelnen Hydrophonelements ist somit auf einfache Art und Weise möglich.

Ferner betrifft die Erfindung ein Verfahren zum Herstellen eines Systems nach einer der zuvor genannten Ausfübrungsformen. Hierzu wird die Position des Einbauorts des Systems an einem Unterwasserfahrzeug vorbestimmt und in Abhängigkeit des Einbauorts der oder die Abstände von mehreren Halterungen vorbestimmt und mit den vorbestimmten Abständen zueinander auf einem Grundkörper angeordnet. Die Halterungen sind eingerichtet, mit einem Hydrophonelement lösbar verbunden zu werden. In einem weiteren Schritt werden die Hydrophonelemente in die Halterungen des Systems eingesetzt bzw. lösbar mit diesen verbunden.

Dank dem Verfahren ist es möglich, Hydrophone mit beliebigen Abständen zueinander anzuordnen, ohne rechenintensive vom Einbauort abhängige Signalkorrekturen durchführen zu müssen.

Weitere Ausführungsformen ergeben sich aus den anhand der Zeichnungen näher erläuterten Ausführungsbeispielen.

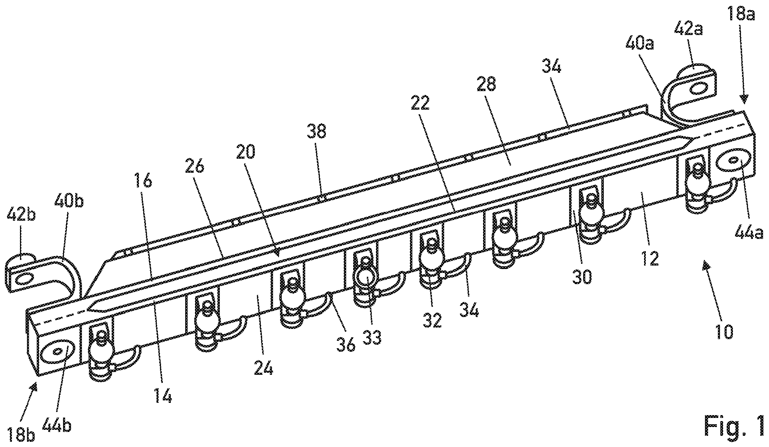

- Fig. 1: zeigt ein System gemäß eines Ausführungsbeispiels,
- Fig. 2: eine vergrößerte Darstellung eines Hydrophonelements,
- Fig. 3: eine vergrößerte Darstellung einer Halterung, und
- Fig. 4: ein Federelement in vergrößerter Darstellung.

Fig, 1 zeigt ein System 10 gemäß eines Ausführungsbeispiels. Das System 10 weist einen Grundkörper 12 auf. Der Grundkörper 12 ist aus Metall, vorzugsweise aus Aluminium, und entlang der strichlierten Linie in einen ersten Abschnitt 14 und einen zweiten Abschnitt 16 unterteilt.

Der erste Abschnitt 14 und der zweite Abschnitt 16 sind an den Enden 18a, 18b des Grundkörpers 12 miteinander verbunden und bilden dazwischen einen Zwischenraum 20. Der Zwischenraum 20 ist mit einem weiteren Metall, hier mit Blei, gefüllt. Zwischen dem Aluminium und dem Blei ist eine Gummischicht 22 vorgesehen.

Der Grundkörper 12 weist eine Oberseite 24 und eine Unterseite 26 auf. Auf der Unterseite 26 ist ein flexibles Material 28, das beispielsweise ein Weichschaum ist, angebracht. Auf der Oberseite 24 des Grundkörpers 12 sind Halterungen 30 aufgebracht, diese sind z.B. durch Kleben mit dem Grundkörper 12 verbunden, In jede der Halterungen 30 ist ein Hydrophonelement 32 eingesetzt. Die Hydrophonelemente 32 weisen ein Hydrophon 33 auf, das mit einem Kunststoff umhüllt ist.

Zur Ansicht ist hier ein Hydrophonelement 32 dargestellt das einen geöffneten Kunststoffkörper aufweist. Darin ist das Hydrophon 33 erkennbar. Die Hydrophonelemente 32 weisen eine elektrische Leitung 34 auf, die durch Ausnehmungen 36 zur Rückseite des flexiblen Materials 28 geführt sind. Auf dieser Rückseite des flexiblen Materials 28, die der vom Grundkörper 12 abgewandten Seite des flexiblen Materials 28 entspricht, sind Kabelhalterungen 38 angeordnet, um die Leitungen 34 zu einer hier nicht dargestellten Sensorelektronikschaltung zu führen.

An den Enden 18a, 18b des Grundkörpers 12 sind außerdem Federelemente 40a, 40b angeordnet. Die Federelemente 40a, 40b umfassen ein gebogenes Metall in U-Form, das an seinen Enden Gummipuffer aufweist. Mit ersten Gummipuffern 42a, 42b wird das Federelement 40a, 40b mit einem Unterwasserfahrzeug verbunden. Gummipuffer 44a, 44b hingegen sind so ausgestaltet, dass diese durch Löcher an den Enden 18a, 18b des Grundkörpers 12 hindurchführen können und sich an dem Grundkörper 12 durch ihre spezielle Ausformung selbst sichern,

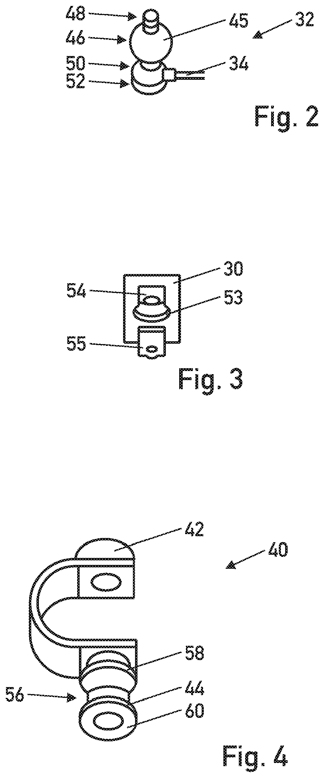

Fig. 2 zeigt eine vergrößerte Darstellung eines Hydrophonelements 32. Das Hydrophonelement 32 weist einen Kunststoffkörper 45 auf. Der Kunststoffkörper 45 weist in einem ersten Bereich 46 das Hydrophon 33 auf. In den weiteren Bereichen 48, 50 ist der Kunststoffkörper 45 so ausgeformt, dass dieser in eine Halterung 30 eingrelfen kann. Im unteren Bereich 52 führt die elektrische Leitung 34, die mit dem Hydrophon 33 im Inneren des Kunststoffkörpers 46 verbunden ist, aus dem Kunststoffkörper 45 heraus.

Fig. 3 zeigt eine vergrößerte Darstellung der Halterung 30. Die Halterung 30 ist in einem mittleren Bereich 53 so ausgeformt, dass der Bereich 46 des Kunststoffkörpers 45 des Hydrophons 33, dessen Form einer Art Kugel entspricht, innerhalb einer Ausnehmung dieses Bereichs 53 positioniert werden kann, Ferner sind zwei Verbindungsbereiche 54, 55 vorgesehen, in denen die Bereiche 48, 50 des Kunststoffkörpers 45 des Hydrophonelements 32 eingeführt werden können,

Fig. 4 zeigt eine vergrößerte Darstellung eines Federelements 40. Das Federelement 40 weist eine U-Form auf, die auf der einen Seite einen Gummipuffer 42 aufweist, der mit einem Unterwasserfahrzeug durch ein Loch, das durch das Ende des Federelements 40 sowie den Gummipuffer 42 führt, mit einer Schraubverbindung verbunden werden kann.

Am anderen Ende des Federelements 40 ist ein weiterer Gummipuffer 44 angeordnet. Dieser Gummipuffer 44 weist einen mittleren Bereich 56 auf, der gegenüber seinen äußeren Bereichen 58, 60 einen geringeren Durchmesser aufweist. Die Bohrung im Gruhdkörper 12 des Systems 10 weist im Wesentlichen einen Durchmesser auf, der dem Durchmesser des mittleren Bereichs 56 des Gummipuffers 44 entspricht. Der Gummipuffer 44 wird also durch die Bohrung am Grundkörper 12 eingedrückt, wobei der äußere Bereich 60, der flexibel ist, durch die schmalere Bohrung im Grundkörper 12 hindurchgedrückt wird, Sobald dieser äußere Bereich 66 durch die Bohrung hindurchgetreten ist, entfaltet sich dieser wieder und hält somit den Grundkörper 12 sicher in Verbindung mit dem Federelement 40,

Das System 10 ist somit durch das Federelement 40 in einfacher Weise von einem Unterwasserfahrzeug lösbar, ohne Schraubverbindungen lösen zu müssen.

### Bezugszeichenliste

- 10: System
- 12: Grundkörper
- 14: Erster Abschnitt
- 16: Zweiter Abschnitt
- 18a, 18b: Enden des Grundkörpers
- 20: Zwischenraum
- 22: Gummischicht
- 24: Oberseite
- 26: Unterseite
- 28: Flexibles Material
- 30: Halterungen
- 32: Hydrophonelement
- 33: Hydrophon
- 34: Elektrische Leitung
- 36: Ausnehmung
- 38: Kabelhalterung
- 40, 40a, 40b: Federelemente
- 42, 42a, 42b: Erster Gummipuffer
- 44, 44a, 44b: Weiterer Gummipuffer
- 45: Kunststoffkörper
- 46: Erster Bereich
- 48, 50: Weitere Bereiche
- 52: Unterer Bereich
- 53: Mittlerer Bereich
- 54,55: Verbindungsbereich
- 56: Mittlerer Bereich
- 58, 60: Äußere Bereiche

## Patentansprüche

1. System (10) für eine Sonareinrichtung umfassend einen Grundkörper (12) mit mindestens einer Halterung (30) für ein Hydrophonelement (32), wobei die Halterung (30) und das Hydrophonelement (32) eingerichtet sind, miteinander lösbar verbunden zu werden, wobei das Hydrophonelement (32) ein Hydrophon (33) aufweist, das seewasserbeständig mit einem Kunststoffkörper (45) umhüllt ist,
wobei der Grundkörper (12) zweiteilig ist oder zwei Abschnitte (14, 16) umfasst, wobei die zwei Teile oder die zwei Abschnitte (14, 16) jeweils eine rechteckige Kontur aufweisen und übereinander angeordnet sind, wobei die zwei Teile oder die zwei Abschnitte (14, 16) an zwei gegenüberliegenden Enden (18a, 18b) des Grundkörpers (12) in Kontakt stehen und/oder verbunden sind und zwischen den in Kontakt stehenden oder verbundenen Enden (18a, 18b) ein Zwischenraum (20) ausgebildet ist,
**dadurch gekennzeichnet, dass**
der Zwischenraum (20) mit einem Metall gefüllt ist.

2. System (10) nach Anspruch 1, wobei der Grundkörper (12) mindestens zwei oder mehr Halterungen (30) aufweist, wobei die Halterungen (30) in einem bzw. jeweils in vordefinierten Abständen zueinander angeordnet sind, die jeweils auf einen vorbestimmten Einbauort des Systems (10) abgestimmt sind.

3. System (10) nach Anspruch 2, wobei der Grundkörper (12) mit einem weiteren Metall, insbesondere mit Aluminium, gefertigt ist.

4. System (10) nach einem der vorhergehenden Ansprüche, wobei der Zwischenraum (20) mit Blei als dem Metall gefüllt ist.

5. System (10) nach einem der vorhergehenden Ansprüche, wobei die Grenzschicht zwischen dem weiteren Metall und dem Grundkörper (12) eine Kunststoffschicht (22), insbesondere eine Gummischicht, aufweist.

6. System (10) nach einem der vorhergehenden Ansprüche, wobei der Grundkörper (12) eine rechteckige Kontur aufweist und auf einer durch die Kontur gebildeten Oberseite (24) die mindestens eine Halterung (30) und auf der durch die Kontur gebildeten Unterseite (26) ein flexibles Material (28), insbesondere einen Weichschaum, angeordnet ist.

7. System (10) nach einem der vorhergehenden Ansprüche, wobei der Grundkörper (12) im Bereich seiner beiden verbundenen oder in Kontakt stehenden Enden (18a, 18b) jeweils ein Federelement (40) aufweist, um den Grundkörper (12) mit einem Unterwasserfahrzeug zu verbinden.

8. System (10) nach einem der vorhergehenden Ansprüche, wobei das System (10) mindestens drei Halterungen (30) und drei Hydrophonelemente (32), z. B. fünf Halterungen (30) und fünf Hydrophonelemente (32), insbesondere acht Halterungen (30) und acht Hydrophonelemente (32), aufweist.

9. System (10) nach Anspruch 8, wobei jedes Hydrophonelement (32) des Systems (10) eine elektrische Leitung (34) aufweist und die elektrische Leitung (34) jedes der Hydrophonelemente (32) des Systems (10) zumindest teilweise auf der vom Grundkörper (12) abgewandten Seite des flexiblen Materials (28) in Kabelhalterungen (38) zu einer Sensorelektronikschaltung geführt wird.

10. System (10) nach einem der vorhergehenden Ansprüche, wobei das System (10) mehrere Hydrophonelemente (32) aufweist und jedes der Hydrophonelemente (32) des Systems (10) im Betrieb des Systems (10) separat auswechselbar ist.

11. Sonareinrichtung mit mehreren Systemen (10) nach einem der Ansprüche 1 bis 10, sowie mehreren Sensorelektronikschaltungen, wobei die Hydrophonelemente (32) von mindestens zwei, z. B. vier, insbesondere acht, Systemen (10) jeweils mit einer Sensorelektronikschaltung elektrisch verbunden sind.

12. Unterwasserfahrzeug mit einer Sonareinrichtung nach Anspruch 11.

13. Verfahren zum Auswechseln eines einzelnen Hydrophonelements (32) eines Systems (10) nach einem der Ansprüche 1 bis 10, wobei das Hydrophonelement (32) ein Hydrophon (33), das seewasserbeständig mit einem Kunststoffkörper (45) umhüllt ist, aufweist, wobei zum Auswechseln zuerst das Hydrophonelement (32) aus einer Halterung (30) für das Hydrophonelement (32), das an einem Grundkörper (12) angeordnet ist, herausgelöst wird und ein anderes Hydrophonelement (32) in die Halterung (30) eingesetzt wird.

14. Verfahren zum Herstellen eines Systems (10) nach einem der Ansprüche 1 bis 10, wobei die Position des Einbauorts des Systems (10) an einem Unterwasserfahrzeug vorbestimmt wird und in Abhängigkeit des Einbauorts der oder die Abstände von mehreren Halterungen (30), die jeweils eingerichtet sind, lösbar mit einem Hydrophonelement (32) verbunden zu werden, vorbestimmt werden und die Halterungen (30) des Systems (10) jeweils mit dem oder den vordefinierten Abständen zueinander mit einem Grundkörper (12) verbunden werden.

## Claims

1. A system (10) for a sonar device, comprising a base body (12) having at least one holder (30) for a hydrophone element (32), wherein the holder (30) and the hydrophone element (32) are configured to be releasably connected to one another, wherein the hydrophone element (32) has a hydrophone (33) which is encased in a plastic body (45) in such a way as to withstand seawater
wherein the base body (12) is in two parts or comprises two sections (14, 16), wherein the two parts or the two sections (14, 16) respectively have a rectangular contour and are arranged above one another, wherein the two parts or the two sections (14, 16) are in contact and/or connected at two opposite ends (18a, 18b) of the base body (12) and an intermediate space (20) is formed between the ends (18a, 18b) which are in contact or connected
**characterized in that**
the intermediate space (20) is filled with a metal.

2. The system (10) as claimed in claim 1, wherein the base body (12) has at least two or more holders (30), wherein the holders (30) are arranged at a predefined separation, or respectively at predefined separations, from one another, the separations respectively being matched to a predetermined installation site of the system (10).

3. The system (10) as claimed in claim 2, wherein the base body (12) is made of a further metal, in particular of aluminum.

4. The system (10) as claimed in one of the preceding claims, wherein the intermediate space (20) is filled with lead as the material.

5. The system (10) as claimed in one of the preceding claims, wherein the boundary layer between the further metal and the base body (12) comprises a plastic layer (22), in particular a rubber layer.

6. The system (10) as claimed in one of the preceding claims, wherein the base body (12) has a rectangular contour, the at least one holder (30) is arranged on an upper side (24) formed by the contour, and a flexible material (28), in particular a soft foam, is arranged on the lower side (26) formed by the contour.

7. The system (10) as claimed in one of the preceding claims, wherein the base body (12) respectively has a spring element (40) in the region of its two ends (18a, 18b) which are connected or in contact, in order to connect the base body (12) to an underwater vehicle.

8. The system (10) as claimed in one of the preceding claims, wherein the system (10) has at least three holders (30) and three hydrophone elements (32), for example five holders (30) and five hydrophone elements (32), in particular eight holders (30) and eight hydrophone elements (32).

9. The system (10) as claimed in claim 8, wherein each hydrophone element (32) of the system (10) has an electrical line (34), and the electrical line (34) of each of the hydrophone elements (32) of the system (10) is guided at least partially on the side of the flexible material (28) facing away from the base body (12) in cable holders (38) to a sensor electronic circuit.

10. The system (10) as claimed in one of the preceding claims, wherein the system (10) has a plurality of hydrophone elements (32), and each of the hydrophone elements (32) of the system (10) can be replaced separately during operation of the system (10).

11. A sonar device having a plurality of systems (10) as claimed in one of claims 1 to 10, and a plurality of sensor electronic circuits, wherein the hydrophone elements (32) of at least two, for example four, in particular eight, systems (10) are respectively electrically connected to a sensor electronic circuit.

12. An underwater vehicle having a sonar device as claimed in claim 11.

13. A method for replacing an individual hydrophone element (32) of a system (10) as claimed in one of claims 1 to 10, wherein the hydrophone element (32) has a hydrophone (33), which is encased in a plastic body (45) in such a way as to withstand seawater, wherein for the replacement the hydrophone element (32) is first separated from a holder (30) for the hydrophone element (32), which is arranged on a base body (12), and another hydrophone element (32) is fitted into the holder (30).

14. A method for producing a system (10) as claimed in one of claims 1 to 10, wherein the position of the installation site of the system (10) on an underwater vehicle is predetermined, and the separation or separations of a plurality of holders (30), which are respectively configured to be connected releasably to a hydrophone element (32) are predetermined as a function of the installation site, and the holders (30) of the system (10) are respectively connected to a base body (12) with the predefined separation or separations from one another.

## Revendications

1. Système (10) pour un dispositif sonar comprenant un corps de base (12) pourvu d'au moins une attache (30) pour un élément hydrophone (32), l'attache (30) et l'élément hydrophone (32) étant configurés pour être reliés l'un à l'autre de manière amovible, l'élément hydrophone (32) possédant un hydrophone (33) qui est enveloppé, d'une manière résistante à l'eau de mer, par un corps en matière plastique (45),
le corps de base (12) étant en deux parties ou comportant deux portions (14, 16), les deux parties ou les deux portions (14, 16) présentant respectivement un contour parallélépipédique et étant disposées l'une au-dessus de l'autre, les deux parties ou les deux portions (14, 16) se trouvant en contact et/ou étant reliées au niveau de deux extrémités opposées (18a, 18b) du corps de base (12) et un espace intermédiaire (20) étant formé entre les extrémités (18a, 18b) qui sont en contact ou qui sont reliées,
**caractérisé en ce que**
l'espace intermédiaire (20) est rempli d'un métal.

2. Système (10) selon la revendication 1, le corps de base (12) possédant au moins deux attaches (30) ou plus, les attaches (30) étant disposées à un ou respectivement à des écarts prédéfinis entre elles, lesquels sont respectivement accordés à un lieu d'installation prédéterminé du système (10).

3. Système (10) selon la revendication 2, le corps de base (12) étant fabriqué avec un métal supplémentaire, notamment avec de l'aluminium.

4. Système (10) selon l'une des revendications précédentes, l'espace intermédiaire (20) étant rempli de plomb en tant que ledit métal.

5. Système (10) selon l'une des revendications précédentes, la couche interfaciale entre le métal supplémentaire et le corps de base (12) possédant une couche de matière plastique (22), notamment une couche de caoutchouc.

6. Système (10) selon l'une des revendications précédentes, le corps de base (12) présentant un contour parallélépipédique et l'au moins une attache (30) étant disposée sur un côté supérieur (24) formé par le contour, et un matériau flexible (28), notamment une mousse tendre, étant disposé sur le côté inférieur (26) formé par le contour.

7. Système (10) selon l'une des revendications précédentes, le corps de base (12) possédant respectivement un élément ressort (40) dans la zone de ses deux extrémités (18a, 18b) reliées ou se trouvant en contact, afin de relier le corps de base (12) avec un véhicule sous-marin.

8. Système (10) selon l'une des revendications précédentes, le système (10) possédant au moins trois attaches (30) et trois éléments hydrophones (32), par exemple cinq attaches (30) et cinq éléments hydrophones (32), notamment huit attaches (30) et huit éléments hydrophones (32).

9. Système (10) selon la revendication 8, chaque élément hydrophone (32) du système (10) possédant une ligne électrique (34) et la ligne électrique (34) de chacun des éléments hydrophones (32) du système (10) étant acheminée au moins partiellement sur le côté du matériau flexible (28) à l'opposé du corps de base (12) dans des attache-câbles (38) vers un circuit électronique de capteur.

10. Système (10) selon l'une des revendications précédentes, le système (10) possédant plusieurs éléments hydrophones (32) et chacun des éléments hydrophones (32) du système (10) pouvant être remplacé séparément pendant le fonctionnement du système (10).

11. Dispositif sonar comprenant plusieurs systèmes (10) selon l'une des revendications 1 à 10, ainsi que plusieurs circuits électroniques de capteur, les éléments hydrophones (32) d'au moins deux, par exemple quatre, notamment huit systèmes (10) étant respectivement reliés électriquement à un circuit électronique de capteur.

12. Véhicule sous-marin comprenant un dispositif sonar selon la revendication 11.

13. Procédé pour remplacer un élément hydrophone (32) individuel d'un système (10) selon l'une des revendications 1 à 10, l'élément hydrophone (32) possédant un hydrophone (33) qui est enveloppé, d'une manière résistante à l'eau de mer, par un corps en matière plastique (45), le remplacement s'effectuant en détachant tout d'abord l'élément hydrophone (32) hors d'une attache (30) pour l'élément hydrophone (32), laquelle est disposée au niveau d'un corps de base (12), et en introduisant un autre élément hydrophone (32) dans l'attache (30).

14. Procédé pour fabriquer un système (10) selon l'une des revendications 1 à 10, la position du lieu d'installation du système (10) au niveau d'un véhicule sous-marin étant prédéterminée et le ou les écarts entre plusieurs attaches (30), qui sont respectivement conçues pour être reliées à un élément hydrophone (32) de manière amovible, étant prédéterminés en fonction du lieu d'installation et les attaches (30) du système (10) étant respectivement reliées à un corps de base (12) avec le ou les écarts prédéfinis entre elles.
